(19) Europäisches Patentamt / European Patent Office / Office européen des brevets

(11) **EP 1 480 207 B1**

(12) **EUROPEAN PATENT SPECIFICATION**

(45) Date of publication and mention
of the grant of the patent:
**02.09.2009 Bulletin 2009/36**

(51) Int Cl.:
**G11B 7/135** *(2006.01)*   **G11B 7/09** *(2006.01)*

(21) Application number: **04253001.4**

(22) Date of filing: **21.05.2004**

(54) **Method and system for forming main and side beams of light for multiple disc formats**

Verfahren und System zur Erzeugung der Haupt- und Nebenlichtstrahlen für mehrere Scheibenformate

Procédé et dispostif de géneration de faisceaux lumineux principaux et latéraux pour plusieurs formats de disque

(84) Designated Contracting States:
**GB**

(30) Priority: **21.05.2003 KR 2003032392**
**30.03.2004 US 812655**

(43) Date of publication of application:
**24.11.2004 Bulletin 2004/48**

(73) Proprietor: **SAMSUNG ELECTRONICS CO., LTD.**
**Suwon-si,**
**Gyeonggi-do (KR)**

(72) Inventors:
• **Lee, Dong-ryeol**
**Seoul (KR)**

• **Lee, Jong-koog**
**Mapo-gu**
**Seoul (KR)**
• **Cho, Myoung-cheol**
**Gangbuk-gu**
**Seoul (KR)**
• **Park, Kyung-ui**
**Seodaemun-gu**
**Seoul (KR)**

(74) Representative: **Robinson, Ian Michael et al**
**Appleyard Lees**
**15 Clare Road**
**Halifax HX1 2HY (GB)**

(56) References cited:
**JP-A- 10 003 673**   **US-A1- 2002 018 409**
**US-B1- 6 219 316**

**Description**

The present invention relates generally to optical disc technology, and more particularly, to forming side beams of light that are each displaced from a main beam of light within a servo tolerance range for multiple disc formats.

The present invention is described for directing main and side beams of light onto an optical disc within an optical pickup. However, the present invention may in general be used for any application having main and side beams of light directed onto an optical disc.

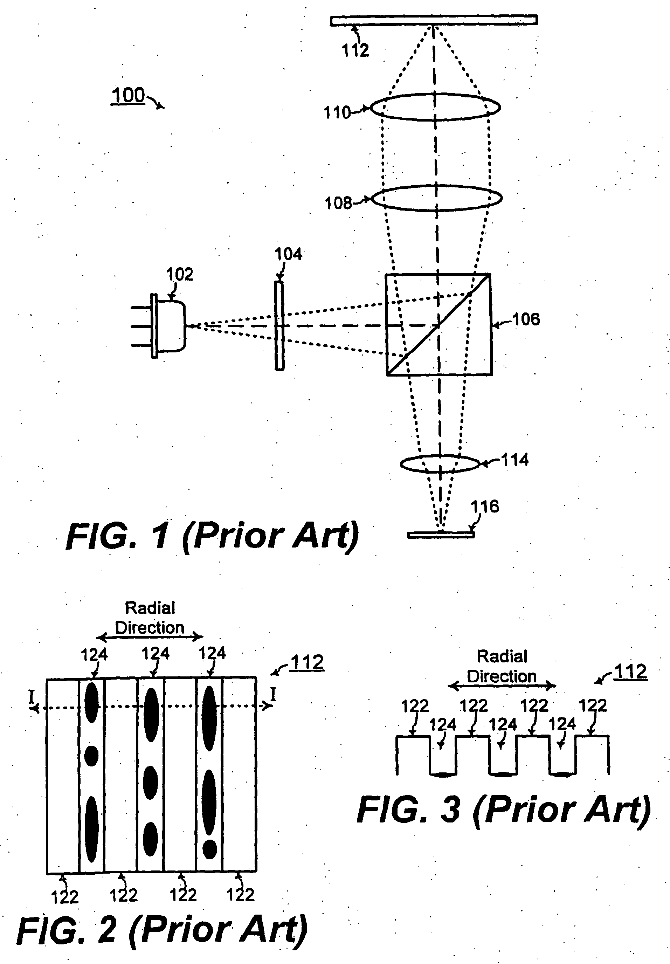

Figure 1 shows a block diagram of an optical pickup 100 with light generated at a laser diode 102. The light from the laser diode 102 passes through a grating 104 that splits such light into a main beam and two side beams. The main and side beams of light are reflected by a beam splitter 106 to be directed through a collimating lens 108. The beams of light from the collimating lens 108 are focused by an objective lens 110 onto an optical disc 112.

The beams of light are then reflected from the optical disc 112 and pass back through the objective lens 110 and the collimating lens 108. Such reflected beams of light pass through the beam splitter 106 to reach a second objective lens 114. The second objective lens 114 focuses the reflected beams of light onto a photo-detector 116.

Figure 2 shows a magnified view of tracks on the optical disc 112 having a plurality of alternating lands 122 and grooves 124 along the radial direction of the optical disc 112. Figure 3 shows a cross-sectional view of such lands 122 and grooves 124 across line I-I in Figure 2. When the optical disc 112 is a DVD-ROM disc, data is recorded with data pits (illustrated as blackened areas in Figure 2) on the grooves 124.

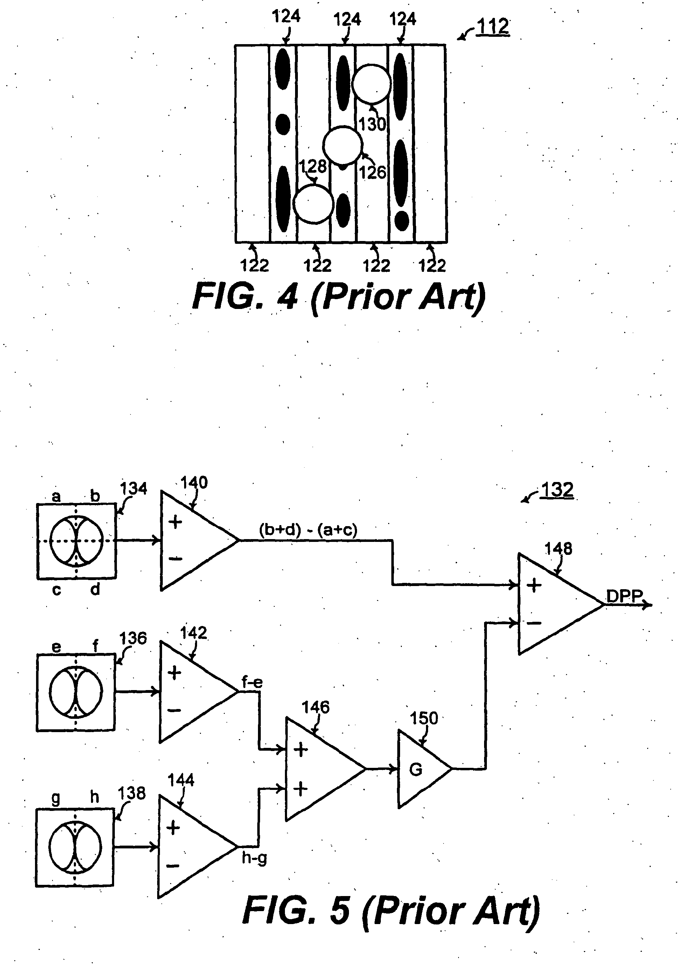

Referring to Figure 4, a main beam 126 is directed onto a groove, and first and second side beams 128 and 130 are directed onto the adjacent lands. The first side beam 128 lags the main beam 126, and the second side beam 130 leads the main beam 126. The main and side beams 126, 128, and 130 are formed by the components of the optical pickup 100 of Figure 1.

Figure 5 shows an error signal calculator 132 that uses the main and side beams 126, 128 and 130 reflected from the optical disc 112 for calculating a DPP (differential push-pull) error signal. First, second, and third photo-detector units 134, 136, and 138 are disposed on the photo-detector 116 in Figure 1. The first photo-detector unit 134 is situated on the photo-detector 116 to detect the intensity of the main beam 126 reflected from the optical disc 112. The second photo-detector unit 136 is situated on the photo-detector 116 to detect the intensity of the first side beam 128 reflected from the optical disc 112. The third photo-detector unit 138 is situated on the photo-detector 116 to detect the intensity of the second side beam 130 reflected from the optical disc 112.

The values a, b, c, and d from the first photo-detector unit 134 represent the intensity of reflected light for the four quadrants of the main beam 126, as illustrated in Figure 5. The values e and f from the second photo-detector unit 136 represent the intensity of reflected light for the two halves of the first side beam 128, as illustrated in Figure 5. The values g and h from the third photo-detector unit 138 represent the intensity of reflected light for the two halves of the second side beam 130, as illustrated in Figure 5.

A plurality of calculating units 140, 142, 144, 146, and 148 and a gain unit 150 are used to generate a DPP (differential push-pull) error signal as follows:

$$DPP = MPP - G(SPP1 + SPP2);$$

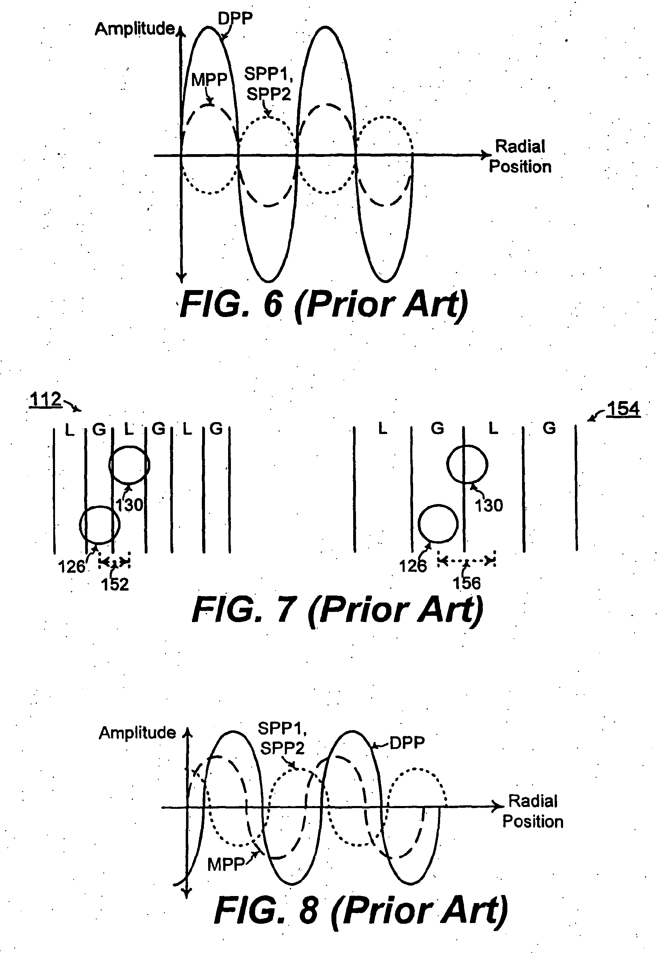

with MPP = [(b+d) - (a+c)]; SPP1 = (f - e); SPP2 = (h - g); and G being a gain value. The DPP, MPP, SPP1, and SPP2 signals are illustrated in Figure 6 with a graph of the amplitudes of such signals as the main and side beams 126, 128, and 130 scan across the radial direction of the optical disc 112.

The DPP error signal is used as a tracking error signal by a tracking servo for the optical pickup 100 of Figure 1. Generally, the intensity of light reflected from a land is greater than that reflected from a groove. For proper tracking, the main beam 126 is desired to be centered on the groove, and the side beams 128 and 130 are desired to be centered on the adjacent lands.

Referring to Figures 4 and 5, if the main and side beams 126, 128, and 130 are shifted undesirably toward the right, (b+d) > (a+c), e > f, and g > h such that the DPP error signal becomes more positive. On the other hand, if the main and side beams 126, 128, and 130 are shifted undesirably toward the left, (a+c) > (b+d), f > e, and h > g such that the DPP error signal becomes more negative. Such change in the DPP error signal is used by the tracking servo as feedback for maintaining the desired radial position of the main and side beams 126, 128, and 130, as known to one of ordinary skill in the art.

Figure 7 illustrates the alternating lands and grooves (labeled as L and G, respectively, in Figure 7) of the optical disc 112 with the main and side beams 126 and 130. The first optical disc 112 has a first disc format with a first track pitch 152. Figure 7 also shows another optical disc 154 having a second disc format with a second track pitch 156.

When the first and second disc formats are different, the first and second track pitches 152 and 156 are different. For example, the first optical disc 112 has a DVD-ROM format with the first track pitch 152 of 0.37μm while the second optical disc 154 has a CD (compact disc) format with the second track pitch 156 of 0.8μm.

In Figures 4 and 7, the side beams 128 and 130 are each placed from the main beam 126 on the optical disc 112 with a displacement equal to the first track pitch 152. Such main and side beams 126, 128, and 130 of Figure 4 are used to generate the DPP error signal as illustrated in Figure 6. However, when such beams 126, 128, and 130 are also used for the second optical disc 154 having the different second disc format, the side beams 128 and 130 are no longer centered about the adjacent lands. As a result, the SPP1 and SPP2 signals are undesirably phase-shifted with respect to the MPP signal such that the amplitude of the DPP signal is decreased as illustrated in Figure 8. If the DPP signal is decreased too much, the tracking servo using the DPP signal becomes unstable.

Each of the side beams 128 and 130 is desired ideally to be placed with a positional phase-shift of 180° from the main beam 126 with the center of one groove to the center of another groove defining one cycle of 360°. In addition, the tracking servo that uses the DPP error signal typically has a servo tolerance range of the positional phase-shift of each of the side beams 128 and 130 from the main beam 126 for stable operation. An example of such a servo tolerance range is $\pm 40°$ from 180°. If the side beams 128 and 130 are not placed within such a servo tolerance range, the tracking servo using the DPP signal becomes unstable.

Nevertheless, an optical pickup that may be used for a plurality of different disc formats is desired. Thus, a mechanism is desired for forming main and side beams positioned within the servo tolerance range for a plurality of different disc formats.

US 6219316 discloses a three-point scanning arrangement compatible for use with two recording media having track pitches of $0.37 \mu m$ and $0.8 \mu m$ respectively according to the preamble of claims 1 and 10. Two side beams are displaced from a main beam by a distance of 7/4 of track spacing 1 ($2*0.37 \mu m$) and ¾ of track spacing 2 ($2*0.8 \mu m$). Accordingly the side beams are displaced by between $1.295 \mu m$ and $1.2 \mu m$ to either side of the main beam.

According to the present invention there is provided an apparatus and method as set forth in the appended claims. Preferred features of the invention will be apparent from the dependent claims, and the description which follows.

In a general aspect of the present invention, a least common multiple of a plurality of track pitches for a plurality of disc formats is determined for placing the side beam from the main beam.

In a general embodiment of the present invention, in a method and system for forming light beams onto a disc for a plurality of disc formats, a main beam is directed onto the disc. A side beam is directed onto the disc with a displacement from the main beam. The displacement is a LCM (least common multiple) distance of respective track pitches for the plurality of disc formats.

In a further embodiment of the present invention, the LCM distance is within a respective tolerance range from a respective integer multiple of a respective track pitch for each of the disc formats.

In another embodiment of the present invention, another side beam is directed onto the disc on another side of the main beam with substantially the same displacement from the main beam. The main and side beams reflected from the disc may be used for generating a tracking error signal such as a DPP (differential push-pull) error signal.

In a further embodiment of the present invention, the main and side beams are generated with light from a laser diode passing through a grating. In that case, at least one of a pitch of the grating and a distance of the laser diode to the grating is adapted to affect the displacement to be the LCM distance.

In this manner, a side beam has positional phase-shift from the main beam within the servo tolerance range for each of the multiple disc formats. The tracking servo uses such main and side beams with stable operation for the multiple disc formats.

For a better understanding of the invention, and to show how embodiments of the same may be carried into effect, reference will now be made, by way of example, to the accompanying diagrammatic drawings in which:

Figure 1 shows components of a conventional optical pickup, according to the prior art;

Figure 2 shows lands and grooves for an example optical disc, according to the prior art;

Figure 3 shows a cross-sectional view of the optical disc of Figure 2, according to the prior art;

Figure 4 shows main and side beams directed onto the disc of Figure 2, according to the prior art;

Figure 5 shows a tracking error signal calculator using the main and side beams reflected from the optical disc of Figure 4, according to the prior art;

Figure 6 shows error signals generated by the tracking error signal calculator of Figure 5, according to the prior art;

Figure 7 shows example optical discs with different disc formats with different track pitches, according to the prior art;

Figure 8 shows the error signals of Figure 6 with a DPP error signal undesirably decreased in amplitude when the side beams are not centered about adjacent lands on the optical disc, according to the prior art;

Figure 9 illustrates placing each side beam from a main beam within a servo tolerance range for multiple disc formats, according to an example embodiment of the present invention;

Figure 10 shows cross-sectional views of lands and grooves for optical discs of multiple disc formats;

Figure 11 shows components of a system for placing each side beam from a main beam within a servo tolerance range for multiple disc formats, according to an example embodiment of the present invention;

Figure 12 shows a flowchart of steps during operation of the system of Figure 11, according to an example embodiment of the present invention;

Figure 13 shows a table of odd-integer multiples of respective track pitches for multiple disc formats used according to an example embodiment of the present invention;

Figure 14 shows a table for determining a displacement of the side beam from the main beam to be a LCM (least common multiple) distance, according to an example embodiment of the present invention;

Figure 15 shows a table of different servo tolerance ranges for the multiple disc formats, according to an example embodiment of the present invention; and

Figures 16 and 17 each illustrate a side beam being outside of the tracks of an optical disc.

The figures referred to herein are drawn for clarity of illustration and are not necessarily drawn to scale. Elements having the same reference number in Figures 1, 2, 3, 4, 5, 6, 7, 8, 9, 10, 11, 12, 13, 14, 15, 16, and 17 refer to elements having similar structure and function.

The present invention is described for directing main and side beams of light onto an optical disc within an optical pickup. However, the present invention may in general be used for any application having main and side beams of light directed onto an optical disc.

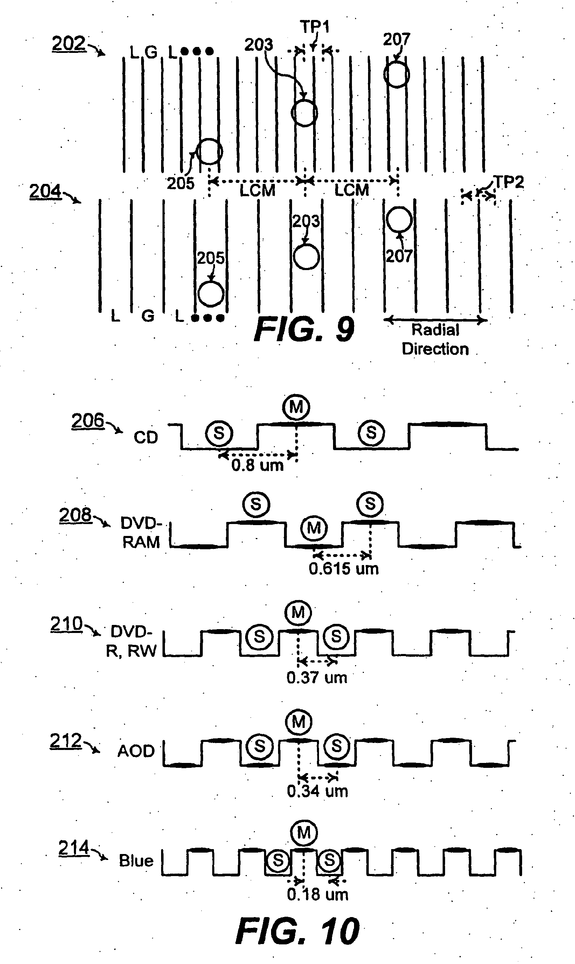

Figure 9 illustrates forming a main beam 203 and side beams 205 and 207 for optical discs of multiple disc formats, according to a general embodiment of the present invention. A first optical disc 202 has a first disc format with a first track pitch TP1, and a second optical disc 204 has a second disc format with a second track pitch TP2.

Additionally in Figure 9, the side beams 205 and 207 are each displaced from the main beam 203 by a LCM (least common multiple) distance in the radial direction of the optical discs 202 and 204. Furthermore, the LCM distance has a relationship to the first and second track pitches as follows:

$$LCM = x*TP1 = y*TP2$$

with x and y each being an odd integer. In the example illustration of Figure 9, x=5, and y=3. With such a relationship, the main and side beams are each substantially centered about a respective one of a land or a groove for both of the first and second optical discs 202 and 204 (with the lands and grooves being labeled as alternating "L" and "G" in Figure 9).

The side beams 205 and 207 are each desired ideally to be placed with a positional phase-shift of 180° from the main beam 203 with the center of one groove to the center of another groove defining one cycle of 360°. With the side beams 205 and 207 being displaced from the main beam 203 by the LCM distance, the side beams 205 and 207 are phase-shifted by 180° from the main beam 203 for both the first and second optical discs 202 and 204 having the different disc formats.

Figure 10 illustrates cross-sectional views of optical discs having lands and grooves for different disc formats. An optical disc 206 with a CD (compact disc) format has data pits formed on lands, and the track pitch for the CD format is 0.8μm. For tracking in the CD format, a main beam is directed onto a land, and side beams are directed onto the adjacent grooves (as illustrated by the circles marked "M" and "S" in Figure 10).

An optical disc 208 for a DVD-RAM format in Figure 10 has data pits formed on lands and grooves, and the track pitch for the DVD-RAM format is 0.615μm. For tracking in the DVD-RAM format, a main beam is directed onto a groove, and side beams are directed onto the adjacent lands.

An optical disc 210 for a DVD-R,RW (DVD-Read, Read/Write) format in Figure 10 has data pits formed on lands, and the track pitch for the DVD-R,RW format is 0.37μm. For tracking in the DVD-R,RW format, a main beam is directed onto a land, and side beams are directed onto the adjacent grooves.

An optical disc 212 for an AOD (advanced optical disc) format in Figure 10 has data pits formed on lands and grooves, and the track pitch for the AOD format is 0.34μm. For tracking in the AOD format, a main beam is directed onto a land, and side beams are directed onto the adjacent grooves.

An optical disc 214 for a blue light format in Figure 10 has data pits formed on lands, and the track pitch for the blue light format is 0.18μm. For tracking in the blue light format, a main beam is directed onto a land, and side beams are directed onto the adjacent grooves.

Similarly, the optical disc 112 of a DVD-ROM format in Figures 2, 3, and 6 has data pits formed on grooves, and the track pitch for the DVD-ROM format is 0.37μm. For tracking in the DVD-ROM format, a main beam is directed onto a groove, and side beams are directed onto the adjacent lands. The different optical discs 112, 206, 208, 210, 212, and 214 for such different disc formats are known to one of ordinary skill in the art.

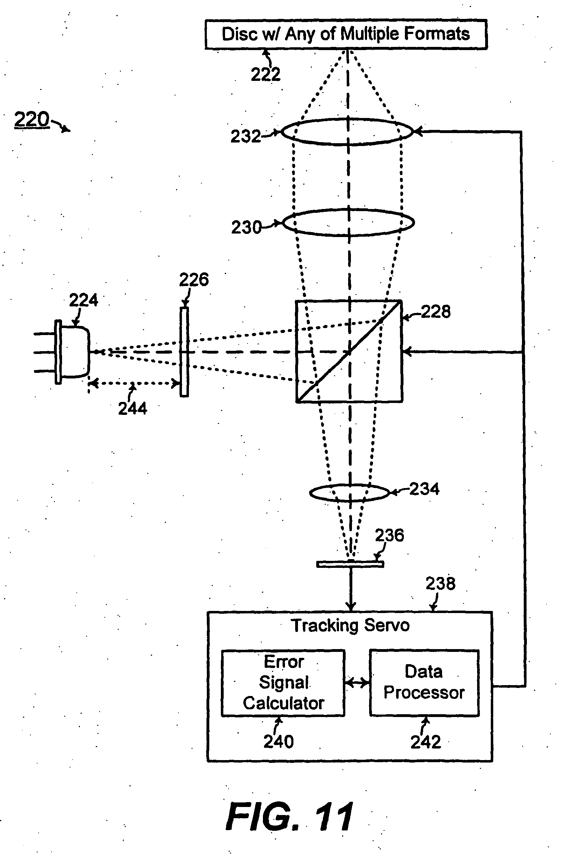

Figure 11 shows a system 220 for generating main and side beams directed onto an optical disc 222 that has any of a plurality of disc formats. The system 220 includes a laser diode 224 for generating light and includes a grating 226 for splitting the light from the laser diode 224 into main and side beams (similar to the main and side beams 203, 205, and 207 of Figure 9). The main and side beams from the grating 226 are reflected by a beam splitter 228 to be directed to a collimating lens 230. The collimating lens 230 collimates the main and side beams toward an objective lens 232 that focuses the main and side beams onto the optical disc 222.

The main and side beams are then reflected from the optical disc 222 and pass back through the objective lens 232 and the collimating lens 230. Such reflected beams of light pass through the beam splitter 228 to reach a second objective lens 234. The second objective lens 234 focuses the reflected main and side beams onto a photo-detector 236. The photo-detector 236 is coupled to a tracking servo 238 that includes an error signal calculator 240 and a data processor 242.

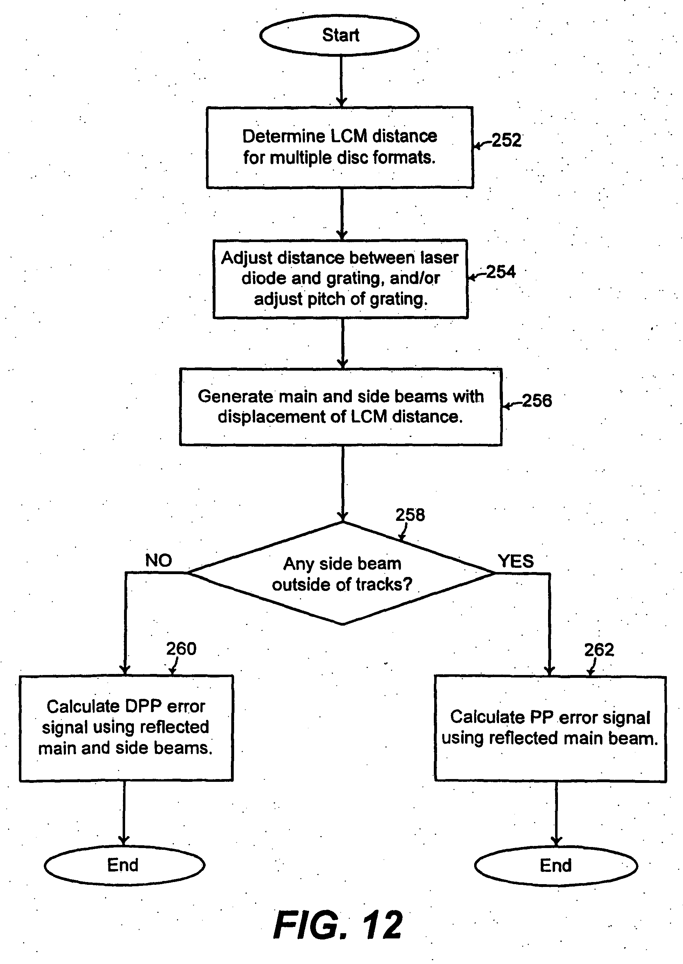

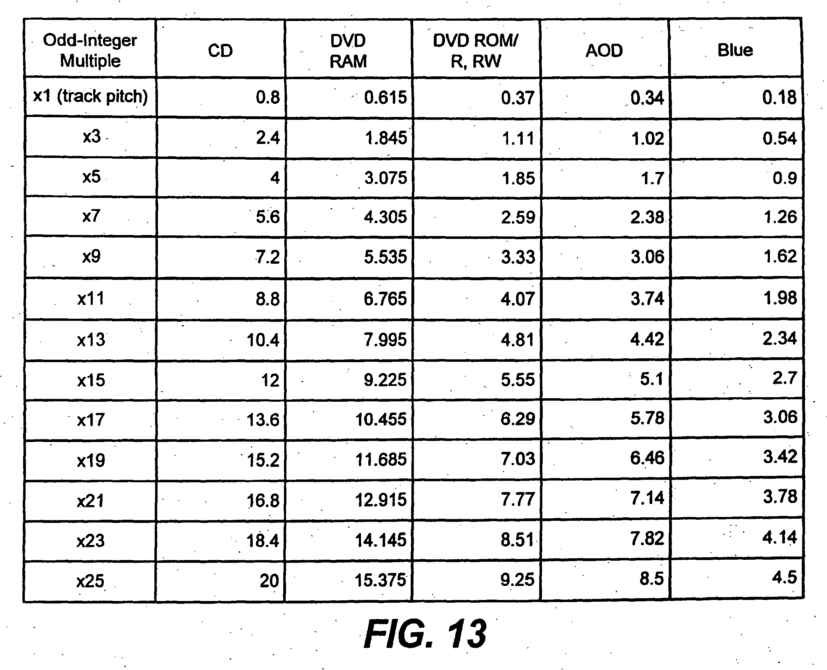

Figure 12 illustrates a flowchart of steps during operation of the system 220 of Figure 11 for directing the main and side beams onto the optical disc 222. Given a plurality of possible disc formats for the optical disc 222, a table of Figure 13 is used to determine a LCM (least common multiple) distance for such multiple disc formats (step 252 of Figure 12). The table of Figure 13 lists the respective track pitch for each of the possible disc formats including the CD format, the DVD-RAM format, the DVD ROM/R,RW format, the AOD format, and the blue light format.

In addition, the table of Figure 13 lists odd-integer multiples of the respective track pitch for each of the disc formats. Referring to the example of Figure 9, a track pitch is the distance from the middle of a groove to the middle of the adjacent land. Referring to the cross-sectional views for the disc formats in Figures 3 and 10, when the main beam is placed on a groove, the side beams are placed on lands. Alternatively, when the main beam is placed on a land, the side beams are placed on grooves.

Thus, the table of Figure 13, which shows possible displacements of the side beam from the main beam, lists odd integer multiples of the track pitch. Displacement of the side beam from the main beam by an even integer multiple of a track pitch would undesirably result in placement of the main and side beams onto either all lands or all grooves. However, the present invention may also be practiced when the LCM distance is even integer multiples of the track pitches for applications where the main and side beams are desired to be placed onto all lands or all grooves.

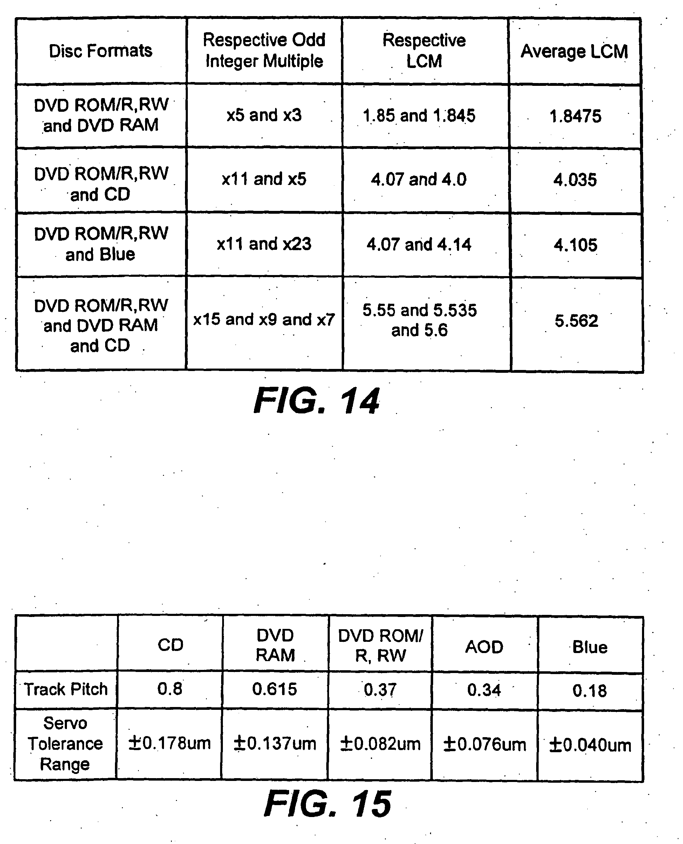

Referring to Figures 13 and 14, from such a table of Figure 13, the LCM distance is determined for any combination of the disc formats desired for the optical disc 222. For example, referring to Figures 13 and 14, assume that the optical disc 222 is desired to have any of the DVD ROM/R,RW format with a first track pitch TP1 = $0.37\mu$m and the DVD RAM format with a second track pitch TP2 = $0.615\mu$m. In that case, from the table of Figure 13, the LCM distance is determined to be 1.8475 which is the average of 5*TP1 and 3*TP2 since 5*TP1 $\approx$ 3*TP2 $\approx$ LCM distance.

In Figure 9, the first optical disc 202 has the DVD ROM/R,RW format with the first track pitch TP1 = $0.37\mu$m, and the second optical disc 204 has the DVD RAM format with a second track pitch TP2=$0.615\mu$m. Also in Figure 9, the side beams 205 and 207 are each displaced from the main beam 203 by the LCM distance $\approx$ 3*TP2 $\approx$ 5*TP1. Referring to Figures 9, 11, and 12, at least one of the pitch of the grating 226 and a distance 244 between the laser diode 224 and the grating 226 is adapted to affect the displacement of each of the side beams 205 and 207 from the main beam 203 such that the LCM distance $\approx$ 3*TP2 $\approx$ 5*TP1 (steps 254 and 256 in Figure 12).

Referring back to Figures 13 and 14, alternatively, assume that the optical disc 222 of Figure 11 is desired to have any of the DVD ROM/R,RW format with a first track pitch TP1 = $0.37\mu$m and the CD format with a second track pitch TP2 = $0.8\mu$m. In that case, from the table of Figure 13, the LCM distance is determined to be 4.035 which is the average of 11*TP1 and 5*TP2 since 11*TP1 $\approx$ 5*TP2 $\approx$ LCM distance.

In a further alternative, assume that the optical disc 222 of Figure 11 is desired to have any of the DVD ROM/R,RW format with a first track pitch TP1 = $0.37\mu$m and the blue light format with a second track pitch TP2=$0.18\mu$m. In that case, from the table of Figure 13, the LCM distance is determined to be 4.105 which is the average of 11*TP1 and 23*TP2 since 11*TP1 $\approx$ 23*TP2 $\approx$ LCM distance.

In a final alternative example, assume that the optical disc 222 of Figure 11 is desired to have any of the DVD ROM/R,RW format with a first track pitch TP1 = $0.37\mu$m, the DVD RAM format with a second track pitch TP2 = $0.615\mu$m, and the CD format with a third track pitch TP3 = $0.8\mu$m. In that case, from the table of Figure 13, the LCM distance is determined to be 5.562 which is the average of 15*TP1, 9*TP2, and 7*TP3 since 15*TP1 $\approx$ 9*TP2 $\approx$ 7*TP3 $\approx$ LCM distance.

Generally, the LCM distance between each of the side beams and the main beam is a respective odd integer multiple of a respective track pitch that is within a respective servo tolerance range from the LCM distance, for each of the multiple disc formats. Figure 15 shows a table of the respective servo tolerance range for each of the disc formats.

Referring to the example of Figure 9, each of the side beams 205 and 207 is desired ideally to be placed with a positional phase-shift of 180° from the main beam 203 with the center of one groove to the center of another groove (or the center of one land to the center of another land) defining one cycle of 360°. The tracking servo 238 that uses the DPP error signal typically has a servo tolerance range of the positional phase-shift of each of the side beams 205 and 207 from the main beam 203 for stable operation. An example of such a servo tolerance range is $\pm$40° from 180°. If the side beams 205 and 207 are not placed within such a servo tolerance range for a disc format, the tracking servo 238 using the DPP signal becomes unstable.

Referring to the table of Figure 15, the CD format has a servo tolerance range of $\pm(0.8\mu m*40/180) = \pm 0.178\mu m$, when the servo tolerance range is $\pm 40°$ from 180°. Similarly for this example servo tolerance range, the DVD RAM format, the DVD ROM/R,RW format, the AOD format, and the blue light format each have a respective servo tolerance range of $\pm 0.137\mu m$, $\pm 0.082\mu m$, $\pm 0.076\mu m$, and $\pm 0.040\mu m$.

Referring to the tables of Figures 14 and 15, the respective odd integer multiple of the respective track pitch is within such a respective servo tolerance range from the average LCM for each row of the table of Figure 14. For example, in the first row of Figure 14, the respective odd integer multiple, 5*TP1, for the DVD ROM/R,RW format is 1.85 which is within the respective servo tolerance range of $\pm 0.082\mu m$ from the average LCM of 1.8475. Similarly in that first row, the respective odd integer multiple, 3*TP2, for the DVD RAM format is 1.845 which is within the respective servo tolerance range of $\pm 0.137\mu m$ from the average LCM of 1.8475.

In the example of the second row of Figure 14, the respective odd integer multiple, 11*TP1, for the DVD ROM/R,RW format is 4.07 which is within the respective servo tolerance range of $\pm 0.082\mu m$ from the average LCM of 4.035. Similarly in that second row, the respective odd integer multiple, 5*TP2, for the CD format is 4.0 which is within the respective servo tolerance range of $\pm 0.178\mu m$ from the average LCM of 4.035.

In the example of the third row of Figure 14, the respective odd integer multiple, 11*TP1, for the DVD ROM/R,RW format is 4.07 which is within the respective servo tolerance range of $\pm 0.082\mu m$ from the average LCM of 4.105. Similarly in that third row, the respective odd integer multiple, 23*TP2, for the blue light format is 4.14 which is within the respective servo tolerance range of $\pm 0.040\mu m$ from the average LCM of 4.105.

In the example of the fourth row of Figure 14, the respective odd integer multiple, 15*TP1, for the DVD ROM/R,RW format is 5.55 which is within the respective servo tolerance range of $\pm 0.082\mu m$ from the average LCM of 5.562. Similarly in that fourth row, the respective odd integer multiple, 9*TP2, for the DVD RAM format is 5.535 which is within the respective servo tolerance range of $\pm 0.137\mu m$ from the average LCM of 5.562. Additionally in that fourth row, the respective odd integer multiple, 7*TP3, for the CD format is 5.6 which is within the respective servo tolerance range of $\pm 0.178\mu m$ from the average LCM of 5.562.

In this manner, the average LCM value in the table of Figure 14 is used for the LCM distance between each of the side beams and the main beam in the system 220 of Figure 11. Thus, the positional phase shift between each of the side beams and the main beam is within the servo tolerance range for stable operation of the tracking servo 238 for the desired multiple disc formats of the optical disc 222.

In another embodiment of the present invention, because the side beams are displaced from the main beam with integer multiples of the track pitch, one of the side beams may be placed outside the tracks of the optical disc 222. Referring to Figures 11, 12, 16, and 17, the data processor 242 within the tracking servo 238 determines the occurrence of such a situation (step 258 of Figure 12).

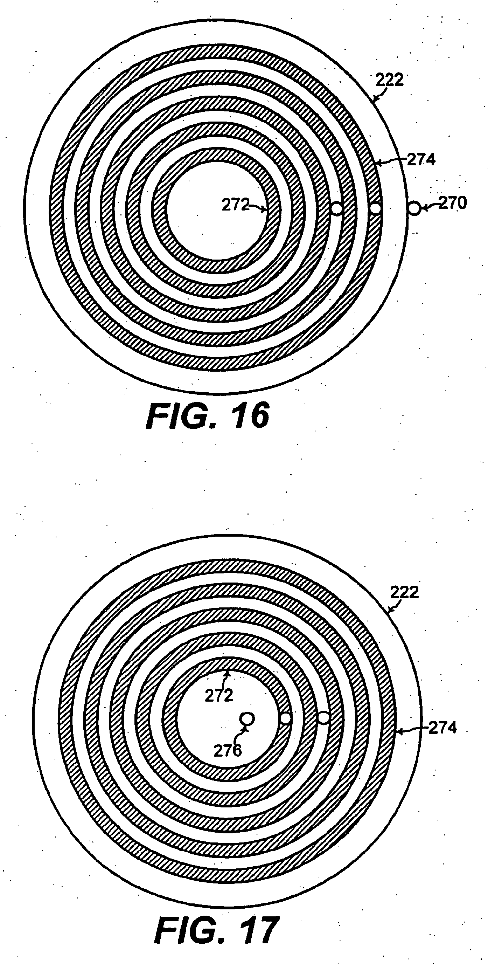

In Figure 16, the optical disc 222 has tracks defined by an inner boundary 272 and an outer boundary 274 in the radial direction of the optical disc 222. Figure 16 illustrates the situation when a side beam 270 is outside the outer boundary 274 of the tracks of the optical disc 222. Figure 17 illustrates the situation when a side beam 276 is outside the inner boundary 272 of the tracks of the optical disc 222. In either case, the data processor 242 keeps track of the position of the main beam and the displacement of the side beams from the main beam to determine when the situations of Figures 16 and 17 occur.

The situation of a side beam being outside of the tracks of the optical disc 222 may be undesired. In that case, the displacement between each of the side beams and the main beam is selected to be the minimum of any of the possible LCM distances that are within the servo tolerance range for the desired multiple disc formats. With such a minimum LCM distance, the occurrence of one of the side beams being outside the tracks of the optical disc 222 is minimized since the side beams are placed as close to the main beam as possible.

However, the present invention may be generally used with any LCM distance between each of the side beams and the main beam as long as the LCM distance is within a respective servo tolerance range from a respective odd integer multiple of a respective track pitch for each of the desired multiple disc formats. Any such LCM distance that is within the servo tolerance range results in stable operation of the tracking servo for the multiple disc formats.

Thus, the term "LCM distance" is generally defined herein as any LCM distance that is within a respective servo tolerance range from a respective odd integer multiple of a respective track pitch for each of the desired multiple disc formats. In a general embodiment of the present invention, each of the side beams is displaced from the main beam on the optical disc by the LCM distance in the radial direction of the optical disc.

In any case, if the side beams are within the tracks of the optical disc 222, the data processor 242 controls the error signal calculator 240 to determine the tracking error signal using all of the main and side beams reflected from the optical disc 222, such as for calculating the DPP signal in Figure 5 for example (step 260 of Figure 12). On the other hand, if a side beam is determined to be outside the tracks of the optical disc 222 as illustrated in Figures 16 or 17, the data processor 242 controls the error signal calculator 240 to determine the tracking error signal using only the main beam reflected from the optical disc 222 (step 262 of Figure 12). An example mechanism for generating a tracking error signal with only the main beam reflected from the optical disc 222 using the PP (push-pull) method is disclosed in U.S. Patent No. 6,580,670.

The foregoing is by way of example only and is not intended to be limiting. For example, the present invention is described for directing main and side beams of light onto the optical disc 222 within an example optical pickup illustrated in Figure 11. However, the present invention may in general be used for any application having main and side beams of light directed onto an optical disc.

In addition, any number as illustrated and described herein is by way of example only. For example, the present invention may be used for forming both of the side beams 205 and 207 in Figure 9 that are each displaced from the main beam 203 by the LCM distance. In that case, the side beams 205 and 207 are placed on opposite sides of the main beam in an example embodiment. Alternatively, the present invention may be used for an application using one of the side beams 205 or 207 that is displaced from the main beam 203 by the LCM distance. The present invention may be generalized to using any number of side beams displaced from the main beam by the LCM distance.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A method for forming light beams onto a disc (202, 204) the method being suitable for a plurality of disc formats wherein each disc format has a different track pitch, the method comprising:

   directing a main beam (203) onto the disc (202, 204); and
   directing a side beam (205, 207) onto the disc (202, 204) with a displacement from the main beam (203);

   **characterised in that:**

   the displacement is within a tolerance range of ±22.2% of each respective track pitch from a centre between two adjacent tracks for each of the disc formats, wherein the displacement is a LCM (least common multiple) distance which is determined to be the average of a respective integer multiple of respective track pitches for each of the disc formats.

2. The method of claim 1, wherein the LCM distance is a minimum of possible values.

3. The method of claim 1 or 2 , wherein the LCM distance is a respective odd integer multiple of a respective track pitch for each of the disc formats.

4. The method of any one of claims 1, 2 and 3, further comprising:

   directing another side beam (207) onto the disc (202, 204) on another side of the main beam (203) with substantially the same displacement from the main beam (203).

5. The method of claim 4, further comprising:

   using the main and side beams (203, 205, 207) reflected from the disc (202, 204) for generating a tracking error signal.

6. The method of claim 4 or 5, further comprising using the main and side beams (203, 205, 207) reflected from the disc (202, 204) for generating a DPP (differential push pull) error signal.

7. The method of claim 4, 5 or 6, further comprising:

   using only the main beam (203) reflected from the disc (202, 204) for generating an error signal when any of the side beams (205, 207) is outside of tracks of the disc (202, 204).

8. The method of any preceding claim, wherein the main and side beams (203, 205, 207) are each directed onto a separate one of a land or a groove on the disc (202, 204).

9. The method of any preceding claim, further comprising:

generating the main and side beams (203, 205, 207) with light from a laser diode (224) passing through a grating (226); and
adapting at least one of a pitch of the grating (226) and a distance of the laser diode (224) to the grating (226) to affect the displacement.

10. A system for forming light beams onto a disc (202, 204), the system being suitable for a plurality of disc formats wherein each disc format has a different track pitch, the system comprising:

a main beam (203) directed onto the disc (202, 204); and
a side beam (205, 207) directed onto the disc (202, 204) with a displacement from the main beam (203);

**characterised in that:**

the displacement is within a tolerance range of each respective track pitch from a centre between two adjacent tracks for each of the disc formats $\pm22.2\%$, wherein the displacement is a LCM (least common multiple) distance which is determined to be the average of a respective integer multiple of respective track pitches for each of the disc formats.

11. The system of claim 11, wherein the system includes:

means for directing the main beam (203) and the side beam (205, 207) onto the disc (202, 204); and
means for displacing the side beam (205, 207) from the main beam (203)

12. The system of claim 10 or 11, wherein the LCM distance is a minimum of possible values.

13. The system of claim 10, 11 or 12, wherein the LCM distance is a respective odd integer multiple of a respective track pitch for each of the disc formats.

14. The system of any one of claims 10, 11, 12, and 13, further comprising:

another side beam (205, 207) formed onto the disc (202, 204) on another side of the main beam (203) with substantially the same displacement from the main beam (203).

15. The system of claim 14, further comprising:

a tracking servo (238) that uses the main and side beams (203, 205, 207) reflected from the disc (202, 204) for generating a tracking error signal.

16. The system of claim 14 or 15, further comprising:

a tracking servo (238) that uses the main and side beams (203, 205, 207) reflected from the disc (202, 204) for generating a DPP (differential push pull) error signal.

17. The system of claim 14, 15 or 16, further comprising:

a tracking servo (238) that uses only the main beam (203) reflected from the disc (202, 204) for generating an error signal when any of the side beams (205, 207) is outside of tracks of the disc (202, 204).

18. The system of any of claims 10 to 17, wherein the main and side beams (203, 205, 207) are each directed onto a separate one of a land or a groove on the disc (202, 204).

19. The system of any of claims 10 to 18, further comprising:

a laser diode (224) for generating light and a grating (226) for splitting the light into the main and side beams (203, 205, 207),
wherein a pitch of the grating (226) and a distance of the laser diode (224) to the grating (226) are adapted to affect the displacement.

**Patentansprüche**

1. Verfahren zur Erzeugung von Lichtstrahlen auf eine Scheibe (202, 204), wobei sich das Verfahren für mehrere Scheibenformate eignet, wobei jedes Scheibenformat einen unterschiedlichen Spurenabstand aufweist, wobei das Verfahren Folgendes umfasst:

Richten eines Hauptstrahls (203) auf die Scheibe (202, 204); und
Richten eines Nebenstrahls (205, 207) auf die Scheibe (202, 204) mit einer Verschiebung von dem Hauptstrahl (203); **dadurch gekennzeichnet, dass**
die Verschiebung innerhalb eines Toleranzbereichs von $\pm22,2\%$ jedes jeweiligen Spurenabstands von einer Mitte zwischen zwei benachbarten Spuren für jedes der Scheibenformate liegt, wobei die Verschiebung ein kgV-Abstand (kgV - kleinstes gemeinsames Vielfaches) ist, der als Durchschnitt eines jeweiligen ganzzahligen Mehrfachen von jeweiligen Spurenabständen für jedes der Scheibenformate bestimmt ist.

2. Verfahren nach Anspruch 1, wobei der kgV-Abstand ein Minimum möglicher Werte ist.

3. Verfahren nach Anspruch 1 oder 2, wobei der kgV-Abstand ein jeweiliges ungerades ganzzahliges Mehrfaches eines jeweiligen Spurenabstands für jedes der Scheibenformate ist.

4. Verfahren nach einem der Ansprüche 1, 2 und 3, ferner umfassend:

   Richten eines weiteren Seitenstrahls (207) auf die Scheibe (202, 204) auf einer anderen Seite des Hauptstrahls (203) mit im Wesentlichen der gleichen Verschiebung von dem Hauptstrahl (203).

5. Verfahren nach Anspruch 4, ferner umfassend:

   Verwendung der Haupt- und Nebenstrahlen (203, 205, 207), die von der Scheibe (202, 204) reflektiert werden, zum Erzeugen eines Spurenfehlersignals.

6. Verfahren nach Anspruch 4 oder 5, ferner umfassend:

   Verwendung der Haupt- und Nebenstrahlen (203, 205, 207), die von der Scheibe (202, 204) reflektiert werden, zum Erzeugen eines DPP-Fehlersignals (DPP - Differential Push-Pull).

7. Verfahren nach Anspruch 4, 5 oder 6, ferner umfassend:

   Verwendung nur des Hauptstrahls (203), der von der Scheibe (202, 204) reflektiert wird, zum Erzeugen eines Fehlersignals, wenn einer der Nebenstrahlen (205, 207) außerhalb der Spuren der Scheibe (202, 204) liegt.

8. Verfahren nach einem der vorhergehenden Ansprüche, wobei die Haupt- und Nebenstrahlen (203, 205, 207) jeweils einzeln auf eine Erhebung oder eine Vertiefung der Scheibe (202, 204) gerichtet sind.

9. Verfahren nach einem der vorhergehenden Ansprüche, ferner umfassend:

   Erzeugen der Haupt- und Nebenstrahlen (203, 205, 207) mit Licht von einer Laserdiode (224), das durch ein Gitter (226) läuft; und
Anpassen eines Abstands des Gitters (226) und/oder eines Abstands der Laserdiode (224) an das Gitter (226), um die Verschiebung zu Beeinflussen.

10. System zur Erzeugung von Lichtstrahlen auf eine Scheibe (202, 204), wobei sich das System für mehrere Scheibenformate eignet, wobei jedes Scheibenformat einen unterschiedlichen Spurenabstand aufweist, wobei das System Folgendes umfasst:

   einen Hauptstrahl (203), der auf die Scheibe (202, 204) gerichtet ist; und
   einen Nebenstrahl (205, 207), der auf die Scheibe (202, 204) mit einer Verschiebung von dem Hauptstrahl (203) gerichtet ist; **dadurch gekennzeichnet, dass**
   die Verschiebung innerhalb eines Toleranzbereichs von $\pm 22{,}2\%$ jedes jeweiligen Spurenabstands von einer Mitte zwischen zwei benachbarten Spuren für jedes der Scheibenformate liegt, wobei die Verschiebung ein kgV-Abstand (kgV - kleinstes gemeinsames Vielfaches) ist, der als Durchschnitt eines jeweiligen ganzzahligen Mehrfachen von jeweiligen Spurenabständen für jedes der Scheibenformate bestimmt ist.

11. System nach Anspruch 11, wobei das System Folgendes enthält:

   Mittel zum Richten des Hauptstrahls (203) und der Nebenstrahlen (205, 207) auf die Scheibe (202, 204); und
   Mittel zum Verschieben des Nebenstrahls (205, 207) von dem Hauptstrahl.

12. System nach Anspruch 10 oder 11, wobei der kgV-Abstand ein Minimum möglicher Werte ist.

13. System nach Anspruch 10, 11 oder 12, wobei der kgV-Abstand ein jeweiliges ungerades ganzzahliges Mehrfaches eines jeweiligen Spurenabstands für jedes der Scheibenformate ist.

14. System nach einem der Ansprüche 10, 11, 12 und 13, ferner umfassend:

   einen weiteren Seitenstrahl (207), der auf die Scheibe (202, 204) auf einer anderen Seite des Hauptstrahls (203) mit im Wesentlichen der gleichen Verschiebung von dem Hauptstrahl (203) erzeugt ist.

15. System nach Anspruch 14, ferner umfassend:

   einen Spurservo (238), der die Haupt- und Nebenstrahlen (203, 205, 207), die von der Scheibe (202, 204) reflektiert werden, zum Erzeugen eines Spurenfehlersignals verwendet.

**16.** System nach Anspruch 14 oder 15, ferner umfassend:

einen Spurservo (238), der die Haupt- und Nebenstrahlen (203, 205, 207), die von der Scheibe (202, 204) reflektiert werden, zum Erzeugen eines DPP-Fehlersignals (DPP - Differential Push-Pull) verwendet.

**17.** System nach Anspruch 14, 15 oder 16, ferner umfassend:

einen Spurservo (238), der nur den Hauptstrahl (203) verwendet, der von der Scheibe (202, 204) reflektiert wird, zum Erzeugen eines Fehlersignals, wenn einer der Nebenstrahlen (205, 207) außerhalb der Spuren der Scheibe (202, 204) liegt.

**18.** System nach einem der Ansprüche 10 bis 17, wobei die Haupt- und Nebenstrahlen (203, 205, 207) jeweils einzeln auf eine Erhebung oder eine Vertiefung der Scheibe (202, 204) gerichtet sind.

**19.** System nach einem der Ansprüche 10 bis 18, ferner umfassend:

eine Laserdiode (224) zum Erzeugen von Licht und ein Gitter (226) zum Teilen des Lichts in die Haupt- und Nebenstrahlen (203, 205, 207);
wobei ein Abstand des Gitters (226) und/oder ein Abstand der Laserdiode (224) an das Gitter (226) angepasst sind, um die Verschiebung zu Beeinflussen.

**Revendications**

**1.** Procédé pour former des faisceaux lumineux sur un disque (202, 204), le procédé étant approprié pour une pluralité de formats de disque, chaque format de disque ayant un pas entre pistes différent, le procédé consistant à :

diriger un faisceau principal (203) vers le disque (202, 204) ; et
diriger un faisceau latéral (205, 207) vers le disque (202, 204) avec un déplacement par rapport au faisceau principal (203) ;
**caractérisé en ce que :**

le déplacement se situe à l'intérieur d'une gamme de tolérance de $\pm 22,2\,\%$ de chaque pas entre pistes respectif par rapport à un centre entre deux pistes adjacentes pour chacun des formats de disque, le déplacement étant une distance PPCM (plus petit commun multiple) qui est déterminée comme étant la moyenne d'un multiple entier respectif des pas entre pistes respectifs pour chacun des formats de disque.

**2.** Procédé selon la revendication 1, dans lequel la distance PPCM est un minimum de valeurs possibles.

**3.** Procédé selon la revendication 1 ou 2, dans lequel la distance PPCM est un multiple entier impair respectif d'un pas entre pistes respectif pour chacun des formats de disque.

**4.** Procédé selon l'une quelconque des revendications 1, 2 et 3, consistant en outre à :

diriger un autre faisceau latéral (207) vers le disque (202, 204) d'un autre côté du faisceau principal (203) avec sensiblement le même déplacement par rapport au faisceau principal (203).

**5.** Procédé selon la revendication 4, consistant en outre à :

utiliser les faisceaux principal et latéraux (203, 205, 207) réfléchis par le disque (202, 204) pour générer un signal d'erreur de poursuite.

**6.** Procédé selon la revendication 4 ou 5, consistant en outre à :

utiliser les faisceaux principal et latéraux (203, 205, 207) réfléchis par le disque (202, 204) pour générer un signal d'erreur DPP (push-pull différentiel).

**7.** Procédé selon la revendication 4, 5 ou 6, consistant en outre :

à n'utiliser que le faisceau principal (203) réfléchi par le disque (202, 204) pour générer un signal d'erreur lorsque l'un quelconque des faisceaux latéraux (205, 207) est en dehors des pistes du disque (202, 204).

**8.** Procédé selon l'une quelconque des revendications précédentes, dans lequel les faisceaux principal et latéraux (203, 205, 207) sont, chacun, dirigés vers l'un, séparé, d'un méplat ou d'un creux sur le disque (202, 204).

**9.** Procédé selon l'une quelconque des revendications précédentes, consistant en outre à :

générer les faisceaux principal et latéraux (203, 205, 207) avec de la lumière provenant d'une diode laser (224) passant à travers un réseau de diffraction (226) ; et

adapter au moins l'un d'un pas du réseau de diffraction (226) et d'une distance de la diode laser (224) au réseau de diffraction (226) pour affecter le déplacement.

10. Système pour former des faisceaux lumineux sur un disque (202, 204), le système étant approprié pour une pluralité de formats de disque, chaque format de disque ayant un pas entre pistes différent, le système comprenant :

un faisceau principal (203) dirigé vers le disque (202, 204) ; et
un faisceau latéral (205, 207) dirigé vers le disque (202, 204) avec un déplacement par rapport au faisceau principal (203) ;
**caractérisé en ce que :**

le déplacement se situe à l'intérieur d'une gamme de tolérance de chaque pas entre pistes respectif par rapport à un centre entre deux pistes adjacentes pour chacun des formats de disque ±22,2 %, dans lequel le déplacement est une distance PPCM (plus petit commun multiple) qui est déterminée comme étant la moyenne d'un multiple entier respectif des pas entre pistes respectifs pour chacun des formats de disque.

11. Système selon la revendication 10, dans lequel le système comporte :

un moyen pour diriger le faisceau principal (203) et le faisceau latéral (205, 207) vers le disque (202, 204) ; et
un moyen pour déplacer le faisceau latéral (205, 207) par rapport au faisceau principal (203).

12. Système selon la revendication 10 ou 11, dans lequel la distance PPCM est un minimum de valeurs possibles.

13. Système selon la revendication 10, 11 ou 12, dans lequel la distance PPCM est un multiple entier impair respectif d'un pas entre pistes respectif pour chacun des formats de disque.

14. Système selon l'une quelconque des revendications 10, 11, 12 et 13, comprenant en outre :

un autre faisceau latéral (205, 207) formé sur le disque (202, 204) d'un autre côté du faisceau principal (203) avec sensiblement le même déplacement par rapport au faisceau principal (203).

15. Système selon la revendication 14, comprenant en outre :

un asservissement de poursuite (238) qui utilise les faisceaux principal et latéraux (203, 205, 207) réfléchis par le disque (202, 204) pour générer un signal d'erreur de poursuite.

16. Système selon la revendication 14 ou 15, comprenant en outre :

un asservissement de poursuite (238) qui utilise les faisceaux principal et latéraux (203, 205, 207) réfléchis par le disque (202, 204) pour générer un signal d'erreur DPP (push-pull différentiel).

17. Système selon la revendication 14, 15 ou 16, comprenant en outre :

un asservissement de poursuite (238) qui n'utilise que le faisceau principal (203) réfléchi par le disque (202, 204) pour générer un signal d'erreur lorsque l'un quelconque des faisceaux latéraux (205, 207) est en dehors des pistes du disque (202, 204).

18. Système selon l'une quelconque des revendications 10 à 17 dans lequel les faisceaux principal et latéraux (203, 205, 207) sont, chacun, dirigés vers l'un, séparé, d'un méplat ou d'un creux sur le disque (202, 204).

19. Système selon l'une quelconque des revendications 10 à 18, comprenant en outre :

une diode laser (224) pour générer de la lumière et un réseau de diffraction (226) pour séparer la lumière en les faisceaux principal et latéraux (203, 205, 207),
dans lequel le pas du réseau de diffraction (226) et la distance de la diode laser (224) au réseau de diffraction (226) sont adaptés de façon à affecter le déplacement.

100

112

110

108

104

102

106

114

116

**FIG. 1 (Prior Art)**

Radial
Direction

124      124      124      112

I                                I

122      122      122      122

**FIG. 2 (Prior Art)**

Radial
Direction      112

122      122      122      122
   124      124      124

**FIG. 3 (Prior Art)**

FIG. 4 (Prior Art)

FIG. 5 (Prior Art)

Amplitude

DPP

MPP

SPP1,
SPP2

Radial
Position

## FIG. 6 (Prior Art)

112

154

L  G  L  G  L  G          L  G  L  G

130

126
152

130

126
156

## FIG. 7 (Prior Art)

Amplitude

SPP1,
SPP2

DPP

Radial
Position

MPP

## FIG. 8 (Prior Art)

*FIG. 9*

*FIG. 10*

Disc w/ Any of Multiple Formats

222

220

232

230

226

224

228

244

234

236

238

Tracking Servo

Error
Signal
Calculator

Data
Processor

240

242

# FIG. 11

Start

Determine LCM distance
for multiple disc formats. —252

Adjust distance between laser
diode and grating, and/or —254
adjust pitch of grating.

Generate main and side beams with
displacement of LCM distance. —256

258

NO ◁ Any side beam
outside of tracks? ▷ YES

260 262

Calculate DPP error
signal using reflected
main and side beams.

Calculate PP error signal
using reflected main beam.

End

End

## FIG. 12

| Odd-Integer Multiple | CD | DVD RAM | DVD ROM/ R, RW | AOD | Blue |
|---|---|---|---|---|---|
| x1 (track pitch) | 0.8 | 0.615 | 0.37 | 0.34 | 0.18 |
| x3 | 2.4 | 1.845 | 1.11 | 1.02 | 0.54 |
| x5 | 4 | 3.075 | 1.85 | 1.7 | 0.9 |
| x7 | 5.6 | 4.305 | 2.59 | 2.38 | 1.26 |
| x9 | 7.2 | 5.535 | 3.33 | 3.06 | 1.62 |
| x11 | 8.8 | 6.765 | 4.07 | 3.74 | 1.98 |
| x13 | 10.4 | 7.995 | 4.81 | 4.42 | 2.34 |
| x15 | 12 | 9.225 | 5.55 | 5.1 | 2.7 |
| x17 | 13.6 | 10.455 | 6.29 | 5.78 | 3.06 |
| x19 | 15.2 | 11.685 | 7.03 | 6.46 | 3.42 |
| x21 | 16.8 | 12.915 | 7.77 | 7.14 | 3.78 |
| x23 | 18.4 | 14.145 | 8.51 | 7.82 | 4.14 |
| x25 | 20 | 15.375 | 9.25 | 8.5 | 4.5 |

## FIG. 13

EP 1 480 207 B1

| Disc Formats | Respective Odd Integer Multiple | Respective LCM | Average LCM |
|---|---|---|---|
| DVD ROM/R,RW and DVD RAM | x5 and x3 | 1.85 and 1.845 | 1.8475 |
| DVD ROM/R,RW and CD | x11 and x5 | 4.07 and 4.0 | 4.035 |
| DVD ROM/R,RW and Blue | x11 and x23 | 4.07 and 4.14 | 4.105 |
| DVD ROM/R,RW and DVD RAM and CD | x15 and x9 and x7 | 5.55 and 5.535 and 5.6 | 5.562 |

**FIG. 14**

| | CD | DVD RAM | DVD ROM/ R, RW | AOD | Blue |
|---|---|---|---|---|---|
| Track Pitch | 0.8 | 0.615 | 0.37 | 0.34 | 0.18 |
| Servo Tolerance Range | ±0.178um | ±0.137um | ±0.082um | ±0.076um | ±0.040um |

**FIG. 15**

**FIG. 16**

**FIG. 17**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6219316 B
- US 6580670 B